# EUROPÄISCHE PATENTSCHRIFT

(11) **EP 3 774 417 B1**
(45) Veröffentlichungstag und Bekanntmachung des Hinweises auf die Patenterteilung: **01.06.2022**
(21) Anmeldenummer: 19701886.4
(22) Anmeldetag: 04.02.2019
(51) Int. Cl.: B60J 3/00, B60J 3/04, B32B 17/10

(54) **VERBESSERTER OPTISCHER EINDRUCK EINER PDLC-FAHRZEUGSCHEIBE DURCH EINE KOMBINATION VON DUNKLEN INNEN- UND AUSSENSTAPELN**
IMPROVED OPTICAL IMPRESSION OF A PDLC VEHICLE DISC THROUGH A COMBINATION OF DARK INNER AND OUTER STACKS
IMPRESSION OPTIQUE AMÉLIORÉE D'UN PARE-BRISE DE VÉHICULES EN PDLC AU MOYEN D'UNE COMBINAISON D'EMPILEMENTS INTÉRIEUR ET EXTÉRIEUR FONCÉS

(30) Priorität: 26.03.2018 EP 18163891
(43) Veröffentlichungstag der Anmeldung: 17.02.2021
(73) Patentinhaber: SAINT-GOBAIN GLASS FRANCE, 92400 Courbevoie (FR)
(72) Erfinder: MANZ, Florian, 52064 Aachen (DE); LABROT, Michael, 52072 Aachen (DE); DO ROSARIO, Jefferson, 52064 Aachen (DE); SCHULZ, Valentin, 52382 Niederzier (DE)
(74) Vertreter: Gebauer, Dieter Edmund
(86) Internationale Anmeldenummer: PCT/EP2019/052629
(87) Internationale Veröffentlichungsnummer: WO 2019/185221

(56) Entgegenhaltungen:
- WO-A1-2014/023475
- WO-A1-2017/135182
- WO-A1-2017/157626
- US-A1- 2016 325 529

## Beschreibung

Die Erfindung betrifft eine PDLC-Fahrzeugscheibe mit verbesserter Optik.

PDLC-Schichten (PDLC = polymer dispersed liquid crystal) sind meist weiße Filme, deren Lichtdurchlässigkeit durch Anlegen einer elektrischen Spannung veränderbar ist, insbesondere sind sie zwischen einem transparenten Modus und einem opaken Modus umschaltbar.

PDLC-Scheiben, auch als PDLC-Glas (engl. smart glazing) oder Intelligentes Glas bezeichnet, sind Scheiben, die eine solche PDLC-Schicht aufweisen und daher zwischen einem transparenten und einem opaken Modus umgeschaltet werden können.

Der heutige Markt für PDLC-Scheiben ist insbesondere auf den Einsatz als Fenster in der Bauindustrie ausgelegt. Scheiben aus PDLC-Glas sind aber auch für Fahrzeuge interessant, insbesondere für die Automobilverglasung. Hier können sie z.B. den Einbau von Sonnenblenden überflüssig machen.

Die US 2016/325529 A1 beschreibt eine PDLC-Scheibe, die mit Licht-emittierenden Elementen auf Basis von LED ausgestattet ist, so dass, wenn dies vom Nutzer gewünscht ist, die Helligkeit auf der Innenseite der Scheibe auch bei aktivierter PDLC-Schicht reguliert und gegebenenfalls erhöht werden kann. Die US 2016/325529 A1 beschreibt auch die Möglichkeit einer starken Tönung von äußeren Scheibenbestandteilen.

Die WO 2017/135182 A1 beschreibt eine PDLC-Scheibe, bei der eine in Bezug auf die PDLC-Schicht innengelegene und eine in Bezug auf die PDLC-Schicht außengelegene Schicht getönt sind, um die Licht- und Energiedurchlässigkeit zu reduzieren.

Bei Einsatz von PDLC-Glas für die Automobilverglasung sind aber besondere Anforderungen hinsichtlich der optischen Eigenschaften zu berücksichtigen, die Anpassungen erfordern.

Wenn z.B. die Sonne auf eine PDLC-Verglasung scheint, ergibt sich ein weißer Schleier, der eine klare Sicht behindert. Durch die Integration eines PDLC in eine Fahrzeugverglasung wird auch die Trübung erhöht. Besonders weiße PDLC-Schichten in Verglasungen mit hoher Transmission, z.B. bei einem Lichttransmissionsgrad über 70%, wie er gewöhnlich für Windschutzscheiben und vordere Seitenscheiben von Fahrzeugen erforderlich ist, zeigen eine störende Trübung. Bei heutigen Glasdächern von Automobilen liegt der Lichttransmissionsgrad TL(A) üblicherweise zwischen 7% und 25%.

WO 2017/157626 beschreibt eine Windschutzscheibe, die eine Außenscheibe und eine Innenscheibe umfasst, die über eine Zwischenschicht miteinander verbunden sind, wobei oberhalb eines zentralen Sichtfelds mit hoher Lichttransmission ein Funktionselement mit elektrisch regelbaren optischen Eigenschaften in die Zwischenschicht eingelagert ist, das über einen Bereich einer ersten thermoplastischen Schicht mit der Außenscheibe und über einen Bereich einer zweiten thermoplastischen Schicht mit der Innenscheibe verbunden ist, wobei der Bereich der ersten thermoplastischen Schicht und/oder der Bereich der zweiten thermoplastischen Schicht getönt oder gefärbt ist. Für den Bereich der ersten thermoplastischen Schicht wird eine Transmission im sichtbaren Spektralbereich von 10% bis 50% und insbesondere 20 bis 40% als geeignet angegeben. Für die getönten oder gefärbten thermoplastischen Schichten ist ein Lichttransmissionsgrad im sichtbaren Spektralbereich von 10% bis 50% angegeben.

DE 10043141 A1 betrifft ein Fahrzeugscheiben-System mit veränderlicher Lichtdurchlässigkeit, das aus einer äußeren Scheibe, einer inneren Scheibe und einem Element zur Veränderung der Transparenz besteht, welches von einer mit einer veränderlichen elektrischen Spannung beaufschlagbaren Schicht oder Folie gebildet wird.

Die WO 2014/023475 A1 beschreibt eine schaltbare Verbundscheibenanordnung mit zwei äußeren Scheiben, einer Zwischenschicht aus thermoplastischen Polymerfolien und einer dazwischen angeordneten SPD(= suspended particle device)-Folie. Zur Verbesserung der Alterungsbeständigkeit der Anordnung wird in der WO 2014/023475 A1 eine Randversiegelung auf Basis von Polyimid und/oder Polyisobutylen vorgeschlagen. Insbesondere für die Fahrzeuginsassen ergeben sich bei Einsatz von PDLC-Scheiben folgende Probleme:
- Transmission: von außen einfallendes Licht erscheint selbst im transparenten Modus (eingeschalteter Modus) der PDLC-Scheibe zu weiß/intransparent, insbesondere in der Corona, wenn die Sonne scheint
- durch Reflexion im Fahrzeuginneren hat die PDLC-Scheibe zudem von Innen betrachtet eine unansehnliche weiße Optik ("wie billiges Plastik"), selbst wenn von außen kein Licht einfällt.

Der Erfindung liegt daher die Aufgabe zu Grunde, eine Fahrzeugscheibe mit einer PDLC-Schicht bereitzustellen, die eine verbesserte Optik aufweist. Insbesondere sollen die vorstehend beschriebenen Probleme hinsichtlich Trübung (Haze) und weißem Schleier bei von außen einfallendem Licht und billiger Anmutung durch Reflexion im Inneren gelindert oder ganz beseitigt werden.

Überraschenderweise wurde festgestellt, dass diese Aufgabe durch eine gezielte Einstellung der Lichttransmissionsgrade von Teillaminaten der PDLC-Scheibe und des Verhältnisses dieser Lichttransmissionsgrade gelöst werden kann.

Die Aufgabe konnte daher durch eine Fahrzeugscheibe gemäß Anspruch 1 und ein Fahrzeug gemäß Anspruch 12 gelöst werden. Bevorzugte Ausgestaltungen der Erfindung sind in den abhängigen Ansprüchen wiedergegeben.

Die Erfindung betrifft somit eine Fahrzeugscheibe, die in dieser Reihenfolge umfasst:
a) eine äußere Glasscheibe,
b) eine oder mehrere Laminierschichten,
c) eine PDLC-Schicht, umfassend eine Polymermatrix, in die Flüssigkristalltröpfchen eingebettet sind, und jeweils eine elektrisch leitfähige Schicht auf den beiden Seiten der Polymermatrix,
d) eine oder mehrere Laminierschichten und
e) eine innere Glasscheibe,
   dadurch gekennzeichnet, dass TL(innen) im Bereich von 7 bis 28% liegt und TL(außen) im Bereich von 20 bis 73% liegt und TL(außen) größer TL(innen) ist, wobei TL(innen) der Lichttransmissionsgrad eines Innenstapels ist, der durch die innere Glasscheibe und die Schichten zwischen der PDLC-Schicht und der inneren Glasscheibe gebildet wird, und TL(außen) der Lichttransmissionsgrad eines Außenstapels ist, der durch die äußere Glasscheibe und die Schichten zwischen der PDLC-Schicht und der äußeren Glasscheibe gebildet wird.

Die erfindungsgemäße Fahrzeugscheibe zeigt gegenüber PDLC-Fahrzeugscheiben nach dem Stand der Technik eine deutlich verbesserte Optik. Insbesondere verringert sich die Bildung von weißem Schleier bei einfallendem Sonnenschein. Ferner ist die optische Anmutung der PDLC-Scheibe deutlich werthaltiger, wenn man aus dem Innern auf sie blickt, die sonst übliche unansehnliche weiße Optik nach billigem Plastik ist viel weniger oder sogar gar nicht mehr feststellbar.

Unter dem Ausdruck "weißer Schleier" versteht man dabei das durch die PDLC Schicht abgelenkte Sonnenlicht, dass ähnlich wie ein weißer Vorhang oder eine Weißfilter die Sicht auf das betrachtete Objekt verhindert. Bei einer starken Ausprägung, erkennt man die Umgebung lediglich schemenhaft, wobei sämtliche Farben auf Weiß- bzw. Grautöne reduziert werden.

Die erfindungsgemäße Fahrzeugscheibe weist eine PDLC-Schicht auf. PDLC-Schichten sind bekannt und in großer Vielfalt im Handel erhältlich.

Die PDLC-Schicht umfasst eine Polymermatrix, in die Flüssigkristalltröpfchen eingebettet sind. Neben den Flüssigkristalltröpfchen kann die Polymermatrix weitere Bestandteile enthalten, z.B. Abstandshalter aus einem nichtleitenden Material aus Glas oder Kunststoff. Die Abstandshalter sind bevorzugt transparent.

Die PDLC-Schicht weist ferner jeweils eine elektrisch leitfähige Schicht auf beiden Seiten der Polymermatrix auf. Die PDLC-Schicht wird somit aus zwei elektrisch leitfähigen Schichten mit einer dazwischenliegenden Polymermatrix, in die Flüssigkristalltröpfchen eingebettet sind, gebildet.

Die elektrisch leitfähigen Schichten sind bevorzugt transparent. Die elektrisch leitende Schicht kann z.B. transparente, leitende Oxide (TCO) enthalten. Beispiele sind mit Zinn dotiertes Indiumoxid (ITO), mit Antimon oder Fluor dotiertes Zinnoxid (SnO₂:F), mit Gallium dotiertes Zinkoxid oder mit Aluminium dotiertes Zinkoxid (ZnO: AI), wobei ITO bevorzugt ist. Die Dicke der elektrisch leitenden Schichten auf Basis dieser transparenten leitenden Oxide (TCO) liegt bevorzugt im Bereich von 10 nm bis 2 µm, stärker bevorzugt im Bereich von 30 nm bis 500 nm und insbesondere im Bereich von 50 bis 100 nm.

Die elektrisch leitende Schicht kann auch eine Metallschicht sein, vorzugsweise eine Dünnschicht oder ein Stapel von Dünnschichten, die Metallschichten umfassen. Geeignete Metalle sind z.B. Ag, AI, Pd, Cu, Pd, Pt, In, Mo, Au, Ni, Cr, W. Diese Metallbeschichtungen werden als TCC (transparent conductive coating) bezeichnet. Typische Dicken der Einzelschichten liegen im Bereich von 2 bis 50 nm.

Die PDLC-Schicht kann z.B. eine Dicke von 5 bis 40 µm, bevorzugt von 10 bis 25 µm aufweisen.

Die elektrisch leitfähigen Schichten der PDLC-Schicht bilden Elektroden, die mit der Polymermatrix in Kontakt sind. Die elektrisch leitfähigen Schichten sind in der erfindungsgemäßen Scheibe so ausgebildet, dass sie mit einer ein- und ausschaltbaren Spannungsquelle verbunden werden können. Ohne elektrisches Feld sind die Flüssigkristalltröpfchen der Polymermatrix nicht ausgerichtet, was zum trüben oder opaken Modus der Scheiben führt. Das ist der ausgeschaltete oder opake Modus. Bei Anlegen eines elektrischen Feldes werden die Flüssigkristalltröpfchen in gleicher Richtung ausgerichtet und die PDLC-Schicht wird transparent. Das ist der eingeschaltete oder transparente Modus. Der Vorgang ist reversibel.

In einer bevorzugten Ausführungsform umfasst die Fahrzeugscheibe jeweils eine Schutzschicht, die auf beiden Seiten der PDLC-Schicht angeordnet sind und in die die PDLC-Schicht eingebettet sind. Die PDLC-Schicht befindet sich dann zwischen den beiden Schutzschichten. In der Regel ist eine PDLC-Schicht auf beiden Seiten mit einer Schutzfolie bzw. Trägerfolie versehen, aus denen sich in der Fahrzeugscheibe diese optionalen Schutzschichten bilden. Die Schutzfolien bzw. Trägerfolien für die PDLC-Schicht dienen dem Schutz und der besseren Handhabung. Es ist aber auch möglich, die PDLC-Schichten ohne solche Schutzschichten zu verwenden.

In dieser Anmeldung werden diese optionalen Schutzschichten als Teil des nachstehend definierten Innenstapels bzw. Außenstapels und nicht als Teil der PDLC-Schicht angesehen. Die Schutzschichten können gegebenenfalls für die später beschriebene Einstellung der optischen Eigenschaften des Innenstapels und Außenstapels genutzt werden.

Abgesehen von der PDLC-Schicht werden für die in der Fahrzeugscheibe enthaltenen Schichten gewöhnlich entsprechende Folien für die Herstellung eingesetzt.

Die Schutzschichten sind bevorzugt polymere Schichten. Bevorzugt enthalten sie zumindest ein thermoplastisches Polymer. Die beiden Schutzschichten können gleich oder verschieden sein. Die Schutzschichten können z.B. Polyethylenterephthalat (PET), Ethylenvinylacetat (EVA), Polyvinylbutyral (PVB), Polypropylen, Polycarbonat, Polymethylmetacrylat, Polyacrylat, Polyvinylchlorid, Polyacetatharz, Gießharze, Acrylate, fluorierte Ethylen-Propylene, Polyvinylfluorid Ethylen-Tetrafluorethylen oder Mischungen davon enthalten. Besonders bevorzugt sind die Schutzschichten PET-Schichten. Das ist besonders vorteilhaft im Hinblick auf die Stabilisierung der PDLC-Schicht.

Die Dicke jeder Schutzschicht, insbesondere einer PET-Schutzschicht kann z.B. im Bereich von 0,1 mm bis 1 mm, bevorzugt im Bereich von 0,1 mm bis 0,2 mm, liegen.

Ein Verbund aus zwei Schutzfolien mit dazwischen angeordneter PDLC-Schicht kann für den Einbau in die erfindungsgemäße Fahrzeugscheibe eingesetzt werden.

Die erfindungsgemäße Fahrzeugscheibe ist eine Verbundglasscheibe, in der die PDLC-Schicht als funktionelle Schicht und gegebenenfalls die darüber und darunter angeordneten Schutzschichten wie vorstehend beschrieben enthalten sind. Daneben umfasst die Fahrzeugscheibe eine äußere und eine innere Glasscheibe, die durch eine oder mehrere Laminierfolien auf beiden Seiten der funktionellen Schicht zu einem festen Verbund laminiert sind.

Mit der inneren Glasscheibe, auch als Innenscheibe bezeichnet, wird im Sinne der Erfindung die Glasscheibe bezeichnet, die beim Einbau in ein Fahrzeug als die dem Fahrzeuginnenraum zugewandte Scheibe der Fahrzeugscheibe vorgesehen ist. Mit der äußeren Glasscheibe, auch als Außenscheibe bezeichnet, wird die Glasscheibe bezeichnet, die beim Einbau in ein Fahrzeug als die der äußeren Umgebung zugewandte Scheibe vorgesehen ist.

Die innere Glasscheibe und die äußere Glasscheibe können aus dem gleichen Material oder aus verschiedenem Material sein. Die Scheiben können aus anorganischem Glas und/oder organischem Glas (Polymere) sein. In einer bevorzugten Ausführungsform enthält die innere Glasscheibe und/oder die äußere Glasscheibe Glas und/oder Polymere, bevorzugt Flachglas, Quarzglas, Borosilikatglas, Kalk-Natron-Glas, Alkalialuminosilikatglas, Polycarbonat und/oder Polymethacrylat. Die innere Glasscheibe und die äußere Glasscheibe sind bevorzugt aus Kalk-Natron-Glas.

Die innere Glasscheibe und die äußere Glasscheibe können die gleiche Dicke oder unterschiedliche Dicken aufweisen. Bevorzugt weisen die innere Glasscheibe und die äußere Glasscheibe unabhängig voneinander eine Dicke im Bereich von 0,4 bis 5,0 mm, z.B. 0,4 bis 3,9 mm, stärker bevorzugt 1,6 bis 2,5 mm, auf. Aus mechanischen Gründen ist die Außenscheibe bevorzugt dicker oder gleich dick wie die innere Scheibe.

Die innere Glasscheibe und/oder die äußere Glasscheibe können klar oder getönt sein. Getönte Glasscheiben sind bevorzugt grau oder dunkelgrau. Die gezielte Auswahl der optischen Eigenschaften der Scheiben kann zur erfindungsgemäßen Einstellung der optischen Eigenschaften der Fahrzeugscheibe dienen wie nachstehend beschrieben.

Die innere Glasscheibe und/oder die äußere Glasscheibe können weitere geeignete, an sich bekannte Beschichtungen aufweisen, z.B. Antihaftbeschichtungen, getönte Beschichtungen, Antikratzbeschichtungen oder Low-E-Beschichtungen. Ein Beispiel für beschichtetes Glas ist Low-E-Glas (Low-Emissivity-Glas). Low-E-Gläser sind im Handel erhältlich und mit einer oder mehreren Metallschichten beschichtet. Die Metallbeschichtung ist sehr dünn, z.B. weist sie eine Dicke von etwa 10 bis 200 nm, z.B. etwa 100 nm auf. Bei Einsatz einer beschichteten Glasscheibe als innerer und/oder äußerer Glasscheibe befindet sich die Beschichtung vorzugsweise auf der Innenseite der Glasscheibe relativ zur Fahrzeugscheibe.

In einer bevorzugten Ausführungsform weist die innere Glasscheibe und/oder die äußere Glasscheibe eine Low-E-Beschichtung auf, wobei besonders bevorzugt nur die innere Glasscheibe eine Low-E-Beschichtung aufweist.

Die Fahrzeugscheibe umfasst ferner zwischen äußerer Glasscheibe und PDLC-Schicht oder Schutzschicht und zwischen innerer Glasscheibe und PDLC-Schicht oder Schutzschicht jeweils eine oder mehrere Laminierschichten, insbesondere polymere Laminierschichten. Vorzugsweise enthalten die Laminierschichten ein thermoplastisches Polymer. Die folgenden Angaben beziehen sich unabhängig voneinander auf alle diese eine oder mehrere Laminierschichten, sofern nicht anders angegeben. Die Laminierschichten können gleich oder verschieden sein.

In der Regel werden als Ausgangsmaterial zur Bildung der Laminierschichten entsprechende handelsübliche Laminierfolien eingesetzt. Sie dienen zur Verklebung bzw. Laminierung der Komponenten der Fahrzeugscheibe, um den haftenden Glasverbund zu erhalten.

Die Laminierschicht kann z.B. Polyvinylbutyral (PVB), Ethylenvinylacetat, Polyurethan, Polypropylen, Polyacrylat, Polyethylen, Polycarbonat, Polymethylmetacrylat, Polyvinylchlorid, Polyacetatharz, Gießharz, Acrylat, fluoriniertes Ethylen-Propylen, Polyvinylfluorid und/oder Ethylen-Tetrafluorethylen und/oder ein Gemisch und/oder ein Copolymer davon enthalten. Vorzugsweise enthält die Laminierschicht Polyvinylbutyral (PVB), Ethylenvinylacetat, Polyurethan, und/oder Gemische davon und/oder Copolymere davon, wobei PVB-Laminierschichten bevorzugt sind.

Die Laminierschichten, bevorzugt PVB-Laminierschichten, weisen bevorzugt eine Dicke von 0,1 bis 1,5 mm, stärker bevorzugt von 0,3 bis 0,9 mm, auf.

Neben den vorstehend genannten polymeren Laminierschichten kann die Fahrzeugscheibe gegebenenfalls eine oder mehrere zusätzliche funktionelle Schichten, insbesondere polymere funktionelle Schichten zwischen der inneren und äußeren Glasscheibe aufweisen. Beispiele sind Akustikfolien und IR-reflektierende Folien bzw. die daraus gebildeten Akustikschichten oder IR-reflektierenden-Schichten. IR steht wie üblich als Abkürzung für Infrarot. Sofern neben den Laminierschichten weitere funktionelle Schichten enthalten sind, sind die funktionellen Schichten bevorzugt zwischen zwei Laminerschichten angeordnet. Die Schichten, die am nächsten zur inneren und äußeren Glasscheibe angeordnet sind, sind im allgemeinen Laminierschichten.

Die funktionellen Schichten weisen z.B. jeweils eine Dicke im Bereich von 0,04 bis 1,5 mm, bevorzugt 0,1 bis 1,5 mm, stärker bevorzugt von 0,3 bis 0,9 mm auf.

Akustikschichten sind z.B. aus mehreren, z.B. drei, PVB-Schichten aufgebaut, wobei in der Mitte eine weichere PVB-Schicht enthalten ist. Da die Akustikschichten auch als Laminierschichten geeignet sind, können sie eine Doppelfunktion ausüben.

IR-reflektierende Schichten sind z.B. aus einer polymeren Trägerschicht und einer darauf befindlichen IR-reflektierenden Beschichtung gebildet. Die polymere Trägerschicht kann z.B. aus Polyester, Polycarbonat, Celluloseacetat, Acrylat oder Polyvinylchlorid gebildet sein, wobei eine PET-Trägerschicht bevorzugt ist. Die IR-reflektierende Beschichtung kann grundsätzlich unterschiedlich ausgebildet sein und umfasst bevorzugt mindestens eine Silberschicht. Allgemein üblich sind Mehrfachschichten mit einer oder mehreren Silberschichten als eigentlicher Funktionsschicht, die zwischen metallischen und/oder dielektrischen Schichten eingebettet sind.

In einer bevorzugten Ausführungsform sind zwischen der äußeren Glasscheibe und der PDLC-Schicht mindestens zwei Laminierschichten umfasst und zwischen den beiden Laminierschichten ist eine IR-reflektierende Schicht aus einer polymeren Trägerschicht und einer darauf befindlichen IR-reflektierenden Beschichtung angeordnet.

Die Laminierschichten, bevorzugt PVB-Laminierschichten, sowie optional verwendete funktionelle Schichten und Schutzschichten, insbesondere PET-Schichten, können transparent, farblos oder getönt sein. Getönte Schichten sind bevorzugt graue Schichten. Entsprechende Folien sind im Handel erhältlich.

Erfindungswesentlich ist eine Einstellung der optischen Eigenschaften von Teilkomponenten der Fahrzeugscheibe, nämlich die gezielte Einstellung der Lichttransmissionsgrade bestimmter Teilkomponenten. Die Teilkomponenten ergeben sich dabei durch Trennung des Vollstapels (Fahrzeugscheibe) auf Höhe der PDLC-Schicht in einen Innenstapel und einen Außenstapel, wobei die PDLC-Schicht weder zum Innenstapel noch zum Außenstapel gehört. Es gelten dabei folgende Definitionen:
Außenstapel bedeutet die Teilkomponente der Fahrzeugscheibe, die durch die äußere Glasscheibe und die Schichten zwischen der PDLC-Schicht und der äußeren Glasscheibe gebildet wird. Die Schutzschicht auf der zur äußeren Scheibe weisenden Seite der PDLC-Schicht ist somit zusammen mit der äußeren Glasscheibe und den dazwischenliegenden Schichten Teil des Außenstapels.

Innenstapel bedeutet die Teilkomponente der Fahrzeugscheibe, die durch die innere Glasscheibe und die Schichten zwischen der PDLC-Schicht und der inneren Glasscheibe gebildet wird. Die Schutzschicht auf der zur inneren Scheibe weisenden Seite der PDLC-Schicht ist somit zusammen mit der inneren Glasscheibe und den dazwischenliegenden Schichten Teil des Innenstapels.

TL(innen) ist der Lichttransmissionsgrad des Innenstapels. TL(außen) ist der Lichttransmissionsgrad des Außenstapels. TL(gesamt) ist der Lichttransmissionsgrad der gesamten Fahrzeugscheibe im eingeschalteten Modus, d.h. im transparenten Modus der PDLC-Schicht. TL(außen) / TL(innen) ist das Verhältnis von TL(außen) zu TL(innen).

Der Lichttransmissionsgrad bezieht sich auf die Transmission im sichtbaren Spektralbereich und wird hier in Prozent ausgedrückt. Insbesondere wird hier unter Lichttransmissionsgrad der Lichttransmissionsgrad gemäß dem Standard ECE R43 Revision 4 vom 3. April 2017, Lichtart A, verstanden, der auch als TL bzw. TL(A) abgekürzt wird. Zur Bestimmung von TL(innen) und TL(außen) kann der jeweilige Teilstapel z.B. auf einem klaren Glas (z.B. der Glasart PLC^{®} von Saint-Gobain,welches bei einer Dicke von 2,1 mm einen Lichttransmissionsgrad von 91% aufweist) als Stützträger laminiert und gemessen werden, wobei der Beitrag des Stützträgers zum Transmissionsgrad nach Messung herausgerechnet wird. Alternativ kann zur Bestimmung von TL(innen) und TL(außen) der jeweilige Teilstapel auf eine Trennfolie (z.B. eine Polyethylen (PE)-Trennfolie) laminiert werden und der erhaltene Teilstapel nach Abziehen von der Trennfolie gemessen werden. TL(gesamt) wird dort gemessen, wo auch die PDLC-Schicht einbezogen ist. Die Messung TL(innen) und TL(außen) erfolgt an Stellen, die im fertiggestellten Zustand über bzw. unter der PDLC-Schicht liegen.

Erfindungsgemäß gelten folgende Beziehungen:
TL(innen) liegt im Bereich von 7 bis 28%.
TL(außen) liegt im Bereich von 20 bis 73%.TL(außen) ist größer TL(innen), wobei das Verhältnis TL(außen) / TL(innen) im Bereich von 3 bis 2 liegt.

Durch das eingestellte Verhältnis TL(außen) / TL(innen) wie vorstehend angegeben kann eine besonders vorteilhafte Optik erhalten werden.

TL(gesamt) im eingeschalteten Modus, d.h. PDLC-Schicht im transparenten Modus, ist bevorzugt kleiner oder gleich 30%, stärker bevorzugt kleiner 20% und besonders bevorzugt kleiner 10% und ist bevorzugt größer 1%, stärker bevorzugt größer 2%. Meist bevorzugt ist TL(gesamt) im Bereich von 3 bis 8%.

Das Verhältnis TL(außen) / TL(innen) muss größer oder gleich 1, bevorzugt größer 1, sein. Um zu einem optischen ansprechbaren Produkt hinsichtlich Transmission und Reflexion von innen und außen zu kommen, müssen beide Stapel dunkel sein, wobei der Innenstapel dunkler sein sollte. Durch den dunklen Außenstapel wird insbesondere die Sonneneinstrahlung auf die PDLC-Schicht reduziert, so dass die Menge des gestreuten Lichts reduziert wird und sich die weiße Schleierbildung deutlich reduziert. Dies hat auch einen großen Einfluss auf die Intensität der Corona. Durch einen dunklen Innenstapel verringert sich insbesondere der Effekt, dass die PDLC-Schicht bei Betrachtung von innen weiß leuchtet.

Die Integration von dunklen Schichten in die Fahrzeugscheibe ist für den optischen Eindruck sehr vorteilhaft. Dabei ist es wichtig, dunkle Schichten auf der Außen- und Innenseite der PDLC-Schicht anzuordnen, um einen guten Gesamteindruck zu erzielen. Insbesondere das vorstehend genannte Verhältnis TL(außen)/TL(innen) verbessert den optischen Eindruck im Fahrzeug, insbesondere Auto, in vielen Situationen erheblich.

Die Einstellung der vorstehend angeführten optischen Eigenschaften kann durch geeignete Auswahl der zum Innen- und Außenstapel gehörenden Einzelkomponenten erreicht werden, wofür getönte bzw. dunkle Glasscheiben, getönte bzw. dunkle Laminierschichten, Schutzschichten und/oder andere funktionelle Schichten aufeinander abgestimmt eingesetzt werden können.

So können z.B. zur Abdunkelung bzw. Verringerung des Lichttransmissionsgrads des Außenstapels eine oder mehrere der folgenden Maßnahmen getroffen werden, ausgehend vom ansonsten üblichen Einsatz von weitgehend transparenten Komponenten:
- Verwendung einer dunklen Glasscheibe als äußere Glasscheibe
- Verwendung einer dunklen Beschichtung auf der äußeren Glasscheibe
- Verwendung einer dunklen PVB-Folie, insbesondere für die Laminierschicht
- Verwendung einer dunklen PET-Folie oder einer dunklen Beschichtung auf einer PET-Folie, als zusätzliche Schicht oder als IR-reflektierende Schicht.
- Verwendung einer dunklen PET-Folie als Schutzschicht für die PDLC-Schicht.

Zur Abdunkelung bzw. Verringerung des Lichttransmissionsgrads des Innenstapels können z.B. eine oder mehrere der folgenden Maßnahmen getroffen werden, ausgehend vom ansonsten üblichen Einsatz von weitgehend transparenten Komponenten:
- Verwendung einer dunklen PET-Folie als Schutzschicht für die PDLC-Schicht.
- Verwendung einer dunklen PVB-Folie, insbesondere für die Laminierschicht
- Verwendung einer dunklen Glasscheibe als innere Glasscheibe
- Verwendung einer dunklen Beschichtung auf der inneren Glasscheibe (z.B. eine dunkle Low E-Beschichtung).

In einer bevorzugten Ausführungsform ist mindestens eine der Laminierschichten eine getönte Laminierschicht, insbesondere eine getönte PVB-Schicht, wobei die getönte Laminierschicht vorzugsweise eine graue Laminierschicht ist.

In einer bevorzugten Ausführungsform sind die innere Glasscheibe und/oder die äußere Glasscheibe ausgewählt aus getönten Glasscheiben, wobei die getönte Glasscheibe vorzugsweise eine graue oder dunkelgraue Glasscheibe ist.

In einer bevorzugten Ausführungsform ist die innere Glasscheibe eine getönte Glasscheibe und die äußere Glasscheibe ist eine klare Glasscheibe. In einer anderen bevorzugten Ausführungsform ist die innere Glasscheibe eine getönte Glasscheibe und die äußere Glasscheibe ist eine getönte Glasscheibe, wobei die getönten Glasscheiben vorzugsweise graue oder dunkelgraue Glasscheiben sind.

In einer bevorzugten Ausführungsform ist die PDLC-Schicht seitlich mit einer Klebedichtmasse und/oder einem Thermoplaststreifen abgedichtet. Vorteilhaft ist, dass die Klebedichtmasse und/oder der Thermoplaststreifen die PDLC-Schicht vor Korrosion schützt. Es versteht sich, dass seitlich sich auf die Seitenflächen der PDLC-Schicht im Gegensatz zur Ober- und Unterseite der PDLC-Schicht bezieht.

Die Klebedichtmasse kann z.B. eine Polyvinylbutyral (PVB)-Klebedichtmasse und/oder in Form eines Rahmens ausgearbeitet sein. Bei der Rahmentechnik reicht die PDLC-Schicht nicht bis zum Rand der Fahrzeugscheibe, d.h. sie ist flächenmäßig kleiner als die Fahrzeugscheibe. Der freibleibende Rand wird umlaufend durch die Klebdichtmasse versiegelt, die dieselbe Dicke wie die PDLC-Schicht aufweist und so auch als Distanzhalter fungiert. Auf diese Weise ist die PDLC-Schicht seitlich von der Klebedichtmasse umrahmt.

Bei dem Thermoplaststreifen handelt es sich um ein Band ohne Klebstoff, das umlaufend an den Seitenflächen der PDLC-Schicht U-förmig angebracht wird, so dass die Schenkel des Us auf der Ober- und Unterseite der PDLC-Schicht liegen.

Die PDLC-Schicht kann sich somit vollflächig über die gesamte Fahrzeugscheibe erstrecken oder teilflächig umgeben von einem Bilderrahmen vorliegen. Bei der teilflächigen Anordnung befindet sich die PDLC-Schicht bei Draufsicht bevorzugt im zentralen Bereich der Fahrzeugscheibe, wobei der Flächeninhalt der PDLC-Schicht vorzugsweise mindestens 30%, stärker bevorzugt mindestens 50% und noch weiter bevorzugt mindestens 70% des Flächeninhalts der Fahrzeugscheibe ausmacht.

Bei Fahrzeugscheiben ist häufig nur ein Teil der Scheibe durchsichtig. Bei einer Dachscheibe können z.B. teilweise nur 30% der Scheibe transparent sein. Der Rest der Scheibe ist z.B. hinter dem Fahrzeughimmel (Stoff) bzw. durch einen Schwarzdruck auf der Scheibe abgedunkelt. In der Regel ist es bevorzugt 100% des Durchsichtbereichs der Fahrzeugscheibe mit der PDLC-Schicht auszustatten.

Die erfindungsgemäße Fahrzeugscheibe eignet sich für alle Fahrzeuge, z.B. Kraftfahrzeuge, Züge, Schiffs- oder Luftfahrzeuge, wobei Kraftfahrzeuge besonders bevorzugt sind. Beispiele für geeignete Kraftfahrzeuge sind Busse, Traktoren, Lastkraftwagen und Personenkraftwagen, wobei Personenkraftwagen besonders bevorzugt sind.

In einer bevorzugten Ausführungsform ist die Fahrzeugscheibe eine Schiebedachscheibe, ein Glasdach, eine Heckscheibe, eine hintere Seitenscheibe oder eine vordere Seitenscheibe, vorzugsweise in einem Kraftfahrzeug. Da die Fahrzeugscheibe relativ dunkel ist, ist sie als Windschutzscheibe in der Regel nicht geeignet.

Die Erfindung betrifft auch ein Fahrzeug, umfassend mindestens eine erfindungsgemäße Fahrzeugscheibe, wobei das Fahrzeug bevorzugt ein Kraftfahrzeug ist. Geeignete und bevorzugte Fahrzeuge sind vorstehend genannt.

Die Erfindung wird nachfolgend anhand von nicht einschränkenden Ausführungsbeispielen unter Bezug auf die beigefügten Zeichnungen weiter erläutert.

Die Erfindung wird im Folgenden und in den beigefügten Figuren erläutert. In diesen zeigt:
- Fig. 1: eine schematische Darstellung einer erfindungsgemäßen Fahrzeugscheibe mit PDLC-Schicht im Querschnitt;
- Fig. 2a-b: eine schematische Darstellung einer Fahrzeugscheibe mit PDLC-Schicht im Querschnitt im trüben bzw. opaken Modus (ausgeschalteter Modus, Fig. 2a) und im transparenten Modus (eingeschalteter Modus, Fig. 2b);
- Fig. 3: eine schematische Darstellung einer weiteren erfindungsgemäßen Fahrzeugscheibe mit PDLC-Schicht im Querschnitt;
- Fig. 4: eine schematische Explosionsdarstellung einer weiteren erfindungsgemäßen Fahrzeugscheibe mit PDLC-Schicht.

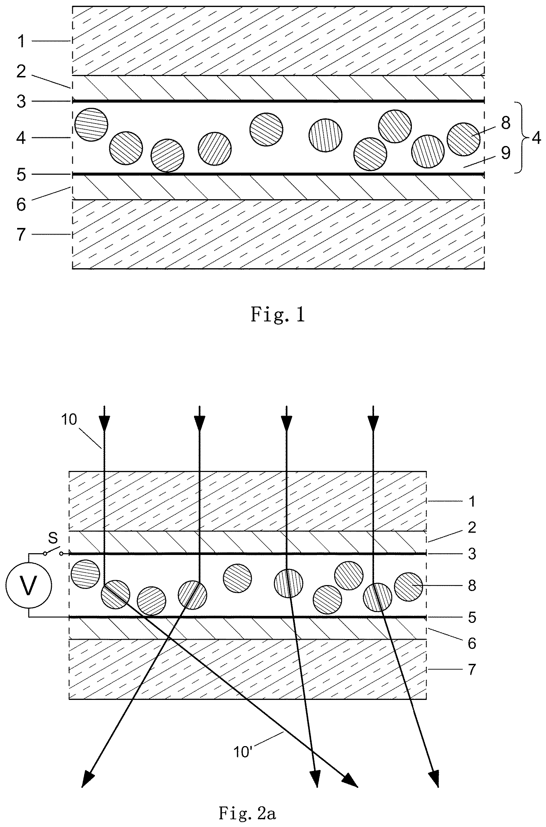

Fig. 1 zeigt schematisch eine erfindungsgemäße Fahrzeugscheibe im Querschnitt mit einer äußeren Glasscheibe 1, einer Laminierschicht 2, einer PDLC-Schicht 4, einer Laminierschicht 6 und einer inneren Glasscheibe 7. Die PDLC-Schicht 4 ist aus zwei elektrisch leitfähigen Schichten 3 und 5 und einer dazwischen angeordneten Polymermatrix 9, in die Flüssigkristalltröpfchen 8 eingebettet sind, gebildet. Die Laminierschichten 2 und 6 können jeweils aus einer PVB-Folie gebildet sein. Die elektrisch leitfähigen Schichten 3, 5 der PDLC-Schicht können transparente ITO-Beschichtungen sein. Bei der dargestellten Fahrzeugscheibe liegt TL(innen) im Bereich von 7 bis 28%, TL(außen) im Bereich von 20 bis 73% und TL(außen) ist größer TL(innen).

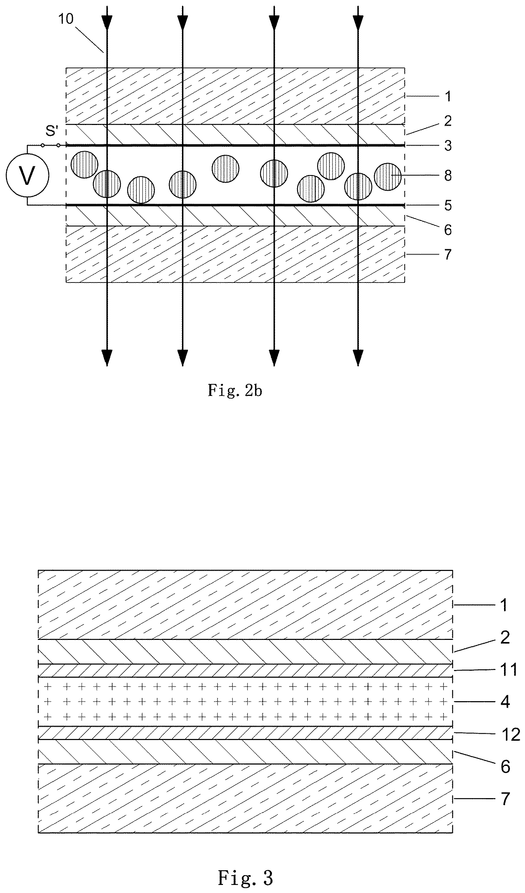

Fig. 2a und 2b zeigen die Funktionsweise der PDLC-Technik an einer Fahrzeugscheibe gemäß Fig. 1. Die Scheibe wird dabei über die beiden elektrisch leitfähigen Schichten 3 und 5 mit einer Spannungsquelle V verbunden. Mit Hilfe eines Schalters S/S' kann der Stromkreis geschlossen (ON-Modus, S') und geöffnet (OFF-Modus, S) werden. Im ON-Modus (eingeschalteter oder transparenter Modus) wird ein elektrisches Feld angelegt, die Flüssigkristalle 8 richten sich geordnet aus und einfallendes Licht 10 wird kaum gestreut, was zu einer transparenten PDLC-Schicht führt (Fig. 2b). Wenn der elektrische Strom abgeschaltet ist (ausgeschalteter oder opaker Modus), sind die Flüssigkristalle 8 zufällig ausgerichtet, so dass einfallendes Licht 10 gestreut wird 10' und die PDLC-Schicht und die Scheibe opak bzw. undurchsichtig werden (Fig. 2a).

Fig. 3 zeigt schematisch eine weitere erfindungsgemäße Fahrzeugscheibe im Querschnitt mit einer äußeren Glasscheibe 1, einer Laminierschicht 2, einer Schutzschicht 11 für die PDLC-Schicht, einer PDLC-Schicht 4, einer Schutzschicht 12 für die PDLC-Schicht, einer Laminierschicht 6 und einer inneren Glasscheibe 7. Die Laminierschichten 2 und 6 können jeweils aus einer PVB-Folie gebildet sein. Die Schutzschichten 11 und 12 können jeweils aus einer PET-Folie gebildet sein. Die elektrisch leitfähigen Schichten 3, 5 der PDLC-Schicht können transparente ITO-Beschichtungen sein. Bei der dargestellten Fahrzeugscheibe liegt TL(innen) im Bereich von 7 bis 28%, TL(außen) im Bereich von 20 bis 73% und TL(außen) ist größer TL(innen).

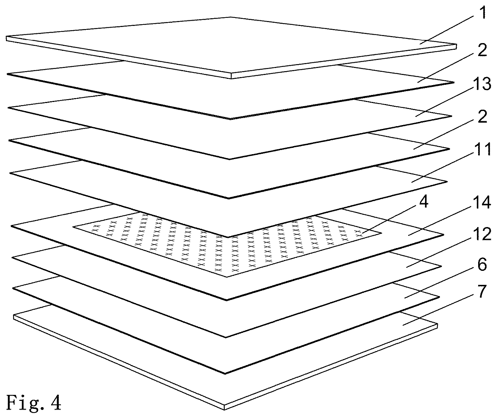

Fig. 4 zeigt eine schematische Explosionsdarstellung einer weiteren erfindungsgemäßen Fahrzeugscheibe im Querschnitt mit folgenden Schichten in dieser Reihenfolge:
- äußere Glasscheibe 1 mit einer Dicke von 2,1 mm aus klarem Glas,
- Laminierschicht 2 mit einer Dicke von 0,38 mm aus klarem PVB,
- IR-reflektierende Schicht 13 aus einer PET-Folie, die IR-reflektierend beschichtet ist
- Laminierschicht 2 mit einer Dicke von 0,38 mm aus grauem PVB,
- Schutzschicht 11 für die PDLC-Schicht
- PDLC-Schicht 4, eingebaut mit einem Rahmen 14 aus PVB, Dicke PDLC-Schicht + Schutzschichten 11 und 12: 0,44 mm,
- Schutzschicht 12 für die PDLC-Schicht,
- Laminierschicht 6 mit einer Dicke von 0,38 mm aus klarem PVB,
- innere Glasscheibe 7 mit einer Dicke von 2,1 mm aus grauen Glas mit Low-E-Beschichtung.

Bei der dargestellten Fahrzeugscheibe liegt TL(innen) im Bereich von 7 bis 28%, TL(außen) im Bereich von 20 bis 73% und TL(außen) ist größer TL(innen).

### Beispiele

Es wurden sieben Fahrzeugscheiben A-G, von denen die Fahrzeugscheiben C-F erfindungsgemäß sind, und als Referenz zwei nicht erfindungsgemäße Fahrzeugscheiben H und I hinsichtlich der optischen Eigenschaften untersucht. In allen Beispielen wurde die gleiche PDLC-Folie zusammen mit zwei darauf angeordneten PET-Schutzfolien verwendet. Nachstehend sind die Komponente der Fahrzeugscheiben aufgelistet, wobei die Reihenfolge der Angaben dem Aufbau von außen (äußere Glasscheibe) nach innen (innere Glasscheibe) entspricht:

### Fahrzeuascheibe A (2x VG10)

Dunkelgraues Glas / klares PVB / PDLC / klares PVB /dunkelgraues Glas

### Fahrzeugscheibe B (2x VG10, Comfortsky^{®})

Dunkelgraues Glas /klares PVB / PDLC / klares PVB / dunkelgraues Glas+Low-E-Beschichtung (Comfortsky^{®})

### Fahrzeuascheibe C (PET IRR)

Klares Glas / klares PVB / PET mit IR-reflektierender Beschichtung / graues PVB / PET-Schutzschicht / PDLC / PET-Schutzschicht / klares PVB / dunkelgraues Glas

### Fahrzeuascheibe D (PET IRR HPS)

Klares Glas / klares PVB / PET mit stark IR-reflektierender Beschichtung / graues PVB / PET-Schutzschicht / PDLC / PET-Schutzschicht / klares PVB / dunkelgraues Glas

### Fahrzeuascheibe E (HPS+2x dark)

Klares Glas / klares PVB / PET mit stark IR-reflektierender Beschichtung / graues PVB / PET-Schutzschicht / PDLC / PET-Schutzschicht / graues PVB / dunkelgraues Glas

### Fahrzeuascheibe F (HPS, 2x d, Comfortsky^{®})

Klares Glas / klares PVB / PET mit stark IR-reflektierender Beschichtung / graues PVB / PET-Schutzschicht / PDLC / PET-Schutzschicht / graues PVB / dunkelgraues Glas+ Low-E (Comfortsky^{®})

### Fahrzeuascheibe G (2x PLC, 2x d)

Klares Glas / dunkles PVB / PET-Schutzschicht / PDLC / PET-Schutzschicht / dunkles PVB / klares Glas (das dunkle PVB des Innenstapels war dunkler als das dunkle PVB des Außenstapels)

### Fahrzeuascheibe H (2x PLC, 1x d)

Klares Glas / dunkles PVB / PET-Schutzschicht / PDLC / PET-Schutzschicht / klares PVB / klares Glas (dieser Aufbau liefert guten thermischen Komfort)

### Fahrzeugscheibe I (2x PLC)

Klares Glas / klares PVB / PET-Schutzschicht / PDLC / PET-Schutzschicht / klares PVB / klares Glas (Standardaufbau für Trennwandscheiben in Kraftfahrzeugen)

Für die Fahrzeugscheiben A bis G und die Referenzscheiben H und I wurden die Transmissionsgrade TL(gesamt) im eingeschalteten Modus (transparenter Modus der PDLC-Schicht), TL(außen), TL(innen) sowie das Verhältnis TL(außen) / TL(innen) bestimmt. Die Ergebnisse sind in nachfolgender Tabelle aufgeführt

**Tabelle**

| Nr. | Scheibe | TL(gesamt) [%] | TL(außen) [%] | TL(innen) [%] | TL(außen) / TL(innen) |
|---|---|---|---|---|---|
| A | 2x VG10 | 7,4 | 28 | 28 | 1,0 |
| B | 2x VG10, Comfortsky | 7,2 | 28 | 27,4 | 1,0 |
| C | PET IRR | | 22,9 | 8,7 | 2,6 |
| D | PET IRR HPS | | 23,2 | 8,7 | 2,7 |
| E | HPS, 2x dark | 1,9 | 23,2 | 8,7 | 2,7 |
| F | HPS, 2x d, Comfortsky | 1,9 | 23,2 | 8,5 | 2,7 |
| G | 2x PLC, 2x d | 30 | 72,9 | 45,7 | 1,6 |
| H* | 2x PLC, 1x d | 7,6 | 9,3 | 90,5 | 0,1 |
| I* | 2x PLC | 74,4 | 90,8 | 90,8 | 1,0 |

| | | | | | |
|---|---|---|---|---|---|
| * Referenzscheiben | | | | | |

Herkömmliche Dachscheiben haben ein Haze <1% was durch den Einsatz einer dunklen PVB auf <3% erhöht wird. Durch den Einsatz von PDLC erhält man eine opake Lichtquelle, die sowohl den Fahrzeuginnenraum gleichmäßig beleuchtet als auch das Blenden der Insassen verhindert. Sobald die weiße PDLC-Folie von einer Lichtquelle, wie beispielsweise der Sonne beschienen wird, streut das PDLC diese.

Betrachtet man als Insasse dieses weiße Streulicht, erhält man einen minderwertigen optischen "Plastik"-Eindruck.

Beim Betrachten der gleichen PDLC Folie mit dem erfindungsgemäßen dunkleren Innenstapel und den gleichen Lichtverhältnissen wurde im Vergleich zu den Referenzscheiben H und I bei den erfindungsgemäßen Fahrzeugscheiben ein hochwertigerer dezent grauer Eindruck beobachtet.

Herkömmliche PDLC-Folien haben im transparenten Zustand einen Haze zwischen 2% und 16%. Für den Einsatz in Fahrzeugen sind in der Regel Folien mit niedrigem Haze zweckmäßig. Die dunklen polymeren Laminierschichten erhöhen den Hazewert ebenfalls. So kann ein vollständiger Aufbau bis zu 10% Haze aufweisen. Im direkten Vergleich zu hellen Scheiben (z.B. mit 70% TL wie bei Referenzscheibe I) hat man also einen stark erhöhten Haze, dennoch wirkt das erfindungsgemäße Produkt optisch ansprechender.

Ein weiterer Unterschied entsteht, wenn eine außenliegende Lichtquelle auf die Scheibe scheint. Bei einer herkömmlichen Scheibe wird das Licht gleichmäßig gestreut, konkret wird beispielsweise das Sonnenlicht derart gestreut, dass ein nur sehr geringer Teil ins Auge des Betrachters abgelenkt wird. Die Sicht nach draußen wird nur gering durch dieses Licht gestört.

Beim Einsatz einer PDLC Scheibe wird das Sonnenlicht richtungsabhängig gestreut. Bewegt man sich mit dem Betrachtungswinkel von der Strahlungsrichtung weg, nimmt die Intensität des Streulichts prinzipiell ab. Es gibt jedoch einen farbigen "Heiligenschein", der ein Intensitätsmaximum im Betrachtungswinkel-abhängigen Streulichtverlauf darstellt. Im Anschluss an dieses farbige Phänomen beobachtet man intensiv weißes Streulicht, das sich erst bei recht großen Winkeln abschwächt.

Das Betrachten von Objekten, durch PDLC Scheiben mit gewöhnlichem Aufbau, wird insbesondere in diesem intensiv weißen Streulichtbereich, erheblich gestört. Die Intensität des Streulichts kann die Lichtstärke des Objekts übertreffen, wodurch die Farben des Objekts durch das weiße Streulicht (weißer Schleier) überstrahlt werden.

Beim erfindungsgemäßen Glasaufbau mit dunkler Innenschicht wird die Intensität des Streulichts besonders reduziert. Beim Betrachten kann man weiterhin die Farben des Objekts erkennen. Trotz höherem Haze und gegebenenfalls dunklerem Gesamtaufbau bei den erfindungsgemäßen Fahrzeugscheiben erscheint das Objekt klarer als bei den Referenzscheiben H und I.

Bei den erfindungsgemäßen Fahrzeugscheiben erhielt man den besten optischen Gesamteindruck bzw. die größte Verringerung von weißem Schleier und "Plastik"-Eindruck bei den Scheiben C bis F.

### Bezugszeichenliste

- 1: äußere Glasscheibe
- 2: Laminierschicht
- 3: elektrisch leitfähige Schicht
- 4: PDLC-Schicht
- 5: elektrisch leitfähige Schicht
- 6: Laminierschicht
- 7: innere Glasscheibe
- 8: Flüssigkristalltröpfchen
- 9: Polymermatrix
- 10: einfallendes Licht
- 10': gestreutes Licht
- 11: Schutzschicht
- 12: Schutzschicht
- 13: IR-reflektierende Schicht
- 14: Rahmen
- S: Schalter (Stromkreis offen)
- S': Schalter (Stromkreis geschlossen)
- V: Spannungsquelle

## Patentansprüche

1. Fahrzeugscheibe, umfassend in dieser Reihenfolge
a) eine äußere Glasscheibe (1),
b) eine oder mehrere Laminierschichten (2),
c) eine PDLC-Schicht (4), umfassend eine Polymermatrix (9), in die Flüssigkristalltröpfchen (8) eingebettet sind, und jeweils eine elektrisch leitfähige Schicht (3, 5) auf den beiden Seiten der Polymermatrix (9),
d) eine oder mehrere Laminierschichten (6) und
e) eine innere Glasscheibe (7),
**dadurch gekennzeichnet, dass** TL(innen) im Bereich von 7 bis 28% liegt und TL(außen) im Bereich von 20 bis 73% liegt und TL(außen) größer TL(innen) ist, wobei TL(innen) der Lichttransmissionsgrad eines Innenstapels ist, der durch die innere Glasscheibe (7) und die Schichten zwischen der PDLC-Schicht (4) und der inneren Glasscheibe (7) gebildet wird, und TL(außen) der Lichttransmissionsgrad eines Außenstapels ist, der durch die äußere Glasscheibe (1) und die Schichten zwischen der PDLC-Schicht (4) und der äußeren Glasscheibe (1) gebildet wird, wobei das Verhältnis TL(außen) / TL(innen) im Bereich von 3 bis 2 liegt.

2. Fahrzeugscheibe nach Anspruch 1, wobei auf den beiden Seiten der PDLC-Schicht (4) jeweils eine Schutzschicht (11, 12) angeordnet ist, wobei die beiden Schutzschichten vorzugsweise Polyethylenterephthalat-Schichten sind.

3. Fahrzeugscheibe nach einem der vorherigen Ansprüche, wobei zwischen der äußeren Glasscheibe (1) und der PDLC-Schicht (4) mindestens zwei Laminierschichten (2) umfasst sind und zwischen den beiden Laminierschichten (2) eine IR-reflektierende Schicht (13) aus einer Trägerschicht und einer darauf befindlichen IR-reflektierenden Beschichtung angeordnet ist, wobei die Trägerschicht bevorzugt eine Polyethylenterephthalat-Schicht ist.

4. Fahrzeugscheibe nach einem der vorherigen Ansprüche, wobei die innere Glasscheibe (7) und/oder die äußere Glasscheibe (1) eine Low-E-Beschichtung aufweisen, wobei vorzugsweise nur die innere Glasscheibe (7) eine Low-E-Beschichtung aufweist.

5. Fahrzeugscheibe nach einem der vorherigen Ansprüche, wobei die Laminierschichten (2, 6) Polyvinylbutyral (PVB), Ethylenvinylacetat, Polyurethan und/oder Gemische davon enthalten, wobei PVB-Schichten bevorzugt sind.

6. Fahrzeugscheibe nach einem der vorherigen Ansprüche, wobei mindestens eine der Laminierschichten (2, 6) eine getönte Laminierschicht, insbesondere eine getönte PVB-Schicht ist, wobei die getönte Laminierschicht vorzugsweise eine graue Laminierschicht ist.

7. Fahrzeugscheibe nach einem der vorherigen Ansprüche, wobei die innere Glasscheibe (7) und/oder die äußere Glasscheibe (1) ausgewählt sind aus getönten Glasscheiben, wobei die getönte Glasscheibe vorzugsweise eine graue oder dunkelgraue Glasscheibe ist.

8. Fahrzeugscheibe nach einem der vorherigen Ansprüche, wobei
die innere Glasscheibe (7) eine getönte Glasscheibe ist und die äußere Glasscheibe (1) eine klare Glasscheibe ist oder
die innere Glasscheibe (7) eine getönte Glasscheibe ist und die äußere Glasscheibe (1) eine getönte Glasscheibe ist, wobei die getönten Glasscheiben vorzugsweise graue oder dunkelgraue Glasscheiben sind.

9. Fahrzeugscheibe nach einem der vorherigen Ansprüche, wobei der Lichttransmissionsgrad TL(gesamt) der gesamten Fahrzeugscheibe im eingeschalteten Modus kleiner oder gleich 30%, bevorzugt kleiner 20% und bevorzugt kleiner 10% ist.

10. Fahrzeugscheibe nach einem der vorherigen Ansprüche, wobei die Fahrzeugscheibe eine Kraftfahrzeugscheibe ist.

11. Fahrzeugscheibe nach einem der vorherigen Ansprüche, wobei die Fahrzeugscheibe eine Schiebedachscheibe, ein Glasdach, eine Heckscheibe, eine hintere Seitenscheibe oder eine vordere Seitenscheibe ist, vorzugsweise in einem Kraftfahrzeug.

12. Fahrzeug, umfassend eine Fahrzeugscheibe nach einem der Ansprüche 1 bis 11, wobei das Fahrzeug bevorzugt ein Kraftfahrzeug ist.

## Claims

1. Vehicle pane, comprising, in this order
a) an outer glass pane (1),
b) one or a plurality of laminated layers (2),
c) a PDLC layer (4), comprising a polymer matrix (9), in which liquid crystal droplets (8) are embedded, and in each case an electrically conductive layer (3, 5) on both sides of the polymer matrix (9),
d) one or a plurality of laminated layers (6), and
e) an inner glass pane (7),
**characterized in that** TL(inside) is in the range from 7 to 28% and TL(outside) is in the range from 20 to 73% and TL(outside) is greater than TL(inside), wherein TL(inside) is the light transmittance of an inner stack that is formed by the inner glass pane (7) and the layers between the PDLC layer (4) and the inner glass pane (7), and TL(outside) is the light transmittance of an outer stack that is formed by the outer glass pane (1) and the layers between the PDLC layer (4) and the outer glass pane (1), wherein the ratio TL(outside) / TL(inside) is in the range from 3 to 2.

2. Vehicle pane according to claim 1, wherein a protective layer (11, 12) is in each case arranged on both sides of the PDLC layer (4), wherein both protective layers are preferably polyethylene terephthalate layers.

3. Vehicle pane according to one of the preceding claims, wherein at least two laminated layers (2) are included between the outer glass pane (1) and the PDLC layer (4), and an IR-reflective layer (13) composed of a carrier layer and an IR-reflective coating situated thereon is arranged between the two laminated layers (2), wherein the carrier layer is preferably a polyethylene terephthalate layer.

4. Vehicle pane according to one of the preceding claims, wherein the inner glass pane (7) and/or the outer glass pane (1) has a low-E coating, wherein preferably, only the inner glass pane (7) has a low-E coating.

5. Vehicle pane according to one of the preceding claims, wherein the laminated layers (2, 6) contain polyvinyl butyral (PVB), ethylene vinyl acetate, polyurethane, and/or mixtures thereof, with PVB layers preferred.

6. Vehicle pane according to one of the preceding claims, wherein at least one of the laminated layers (2, 6) is a tinted laminated layer, in particular is a tinted PVB layer, wherein the tinted laminated layer is preferably a gray laminated layer.

7. Vehicle pane according to one of the preceding claims, wherein the inner glass pane (7) and/or the outer glass pane (1) are selected from tinted glass panes, wherein the tinted glass pane is preferably a gray or dark gray glass pane.

8. Vehicle pane according to one of the preceding claims, wherein
the inner glass pane (7) is a tinted glass pane and the outer glass pane (1) is a clear glass pane, or
the inner glass pane (7) is a tinted glass pane and the outer glass pane (1) is a tinted glass pane, wherein the tinted glass panes are preferably gray or dark gray glass panes.

9. Vehicle pane according to one of the preceding claims, wherein the light transmittance TL(total) of the entire vehicle pane in the switched-on mode is less than or equal to 30%, preferably less than 20%, and preferably less than 10%.

10. Vehicle pane according to one of the preceding claims, wherein the vehicle pane is a motor vehicle pane.

11. Vehicle pane according to one of the preceding claims, wherein the vehicle pane is a sliding roof panel, a glass roof, a rear window, a rear side window, or a front side window, preferably in a motor vehicle.

12. Vehicle, including a vehicle pane according to one of claims 1 through 11, wherein the vehicle is preferably a motor vehicle.

## Revendications

1. Vitre de véhicule, comprenant, dans cet ordre
a) une vitre extérieure (1),
b) une ou plusieurs couches laminées (2),
c) une couche PDLC (4), comprenant une matrice polymère (9), dans laquelle sont noyées des gouttelettes de cristaux liquides (8), et à chaque fois une couche électriquement conductrice (3, 5) des deux côtés de la matrice polymère (9),
d) une ou plusieurs couches laminées (6), et
e) une vitre intérieure (7),
**caractérisé en ce que** TL(intérieur) est dans la gamme de 7 à 28% et TL(extérieur) est dans la gamme de 20 à 73% et TL(extérieur) est supérieur à TL(intérieur), dans lequel TL(intérieur) est la transmittance de lumière d'un empilement intérieur qui est formé par la vitre intérieure (7) et les couches entre la couche PDLC (4) et la vitre intérieure (7), et TL(extérieur) est la transmittance de lumière d'un empilement extérieur qui est formé par la vitre extérieure (1) et les couches entre la couche PDLC (4) et la vitre extérieure (1), dans lequel le rapport TL(extérieur) / TL(intérieur) est dans la gamme de 3 à 2.

2. Vitre de véhicule selon la revendication 1, dans laquelle une couche de protection (11, 12) est à chaque fois disposée sur les deux côtés de la couche PDLC (4), les deux couches de protection étant de préférence des couches de polyéthylène téréphtalate.

3. Vitre de véhicule selon l'une des revendications précédentes, dans laquelle au moins deux couches laminées (2) sont incluses entre la vitre extérieure (1) et la couche PDLC (4), et une couche réfléchissante IR (13) composée d'une couche de support et d'un revêtement réfléchissant IR situé sur celle-ci est disposée entre les deux couches laminées (2), dans laquelle la couche de support est de préférence une couche de polyéthylène téréphtalate.

4. Vitre de véhicule selon l'une des revendications précédentes, dans laquelle la vitre intérieure (7) et/ou la vitre extérieure (1) présente un revêtement à faible émissivité, de préférence seule la vitre intérieure (7) présente un revêtement à faible émissivité.

5. Vitre de véhicule selon l'une des revendications précédentes, dans laquelle les couches laminées (2, 6) contiennent du polyvinylbutyral (PVB), de l'éthylène-acétate de vinyle, du polyuréthane, et/ou des mélanges de ceux-ci, les couches de PVB étant préférées.

6. Vitre de véhicule selon l'une des revendications précédentes, dans lequel au moins une des couches laminées (2, 6) est une couche s laminée teintée, notamment est une couche de PVB teintée, la couche laminée teintée étant de préférence une couche laminée grise.

7. Vitre de véhicule selon l'une des revendications précédentes, dans lequel la vitre intérieure (7) et/ou la vitre extérieure (1) sont choisies parmi les vitres teintées, la vitre teintée étant de préférence une vitre grise ou gris foncé.

8. Vitre de véhicule selon l'une des revendications précédentes, dans lequel
la vitre intérieure (7) est une vitre teintée et la vitre extérieure (1) est une vitre claire, ou bien
la vitre intérieure (7) est une vitre teintée et la vitre extérieure (1) est une vitre teintée, les vitres teintées étant de préférence des vitres grises ou gris foncé.

9. Vitre de véhicule selon l'une des revendications précédentes, dans lequel le facteur de transmission lumineuse TL(total) de l'ensemble du vitre de véhicule en mode allumé est inférieur ou égal à 30%, de préférence inférieur à 20%, et de préférence inférieur à 10%.

10. Vitre de véhicule selon l'une des revendications précédentes, dans lequel le vitre de véhicule est un vitre de véhicule automobile.

11. Vitre de véhicule selon l'une des revendications précédentes, dans laquelle la vitre de véhicule est un panneau de toit coulissant, un toit en verre, une lunette arrière, une vitre latérale arrière, ou une vitre latérale avant, de préférence dans un véhicule automobile.

12. Véhicule, comprenant une vitre de véhicule selon l'une des revendications 1 à 11, dans lequel le véhicule est de préférence un véhicule automobile.
